# EUROPEAN PATENT SPECIFICATION

(11) **EP 1 414 759 B1**
(45) Date of publication and mention of the grant of the patent: **08.06.2005**
(21) Application number: 02758177.6
(22) Date of filing: 09.07.2002
(51) Int. Cl.: C03B 5/12, C21C 5/48, F27B 1/16

(54) **METHOD OF PREPARING A FIBERIZABLE MELT OF A MINERAL MATERIAL**
VERFAHREN ZUR HERSTELLUNG EINER ZU FASERN VERARBEITBAREN SCHMELZE EINES MINERALMATERIALS
PROCEDE DE PREPARATION D'UN MELANGE FONDU D'UNE MATIERE MINERALE EN VUE DE FORMER DES FIBRES

(30) Priority: 12.07.2001 DK 200101088
(43) Date of publication of application: 06.05.2004
(73) Proprietor: Rockwool International A/S, 2640 Hedehusene (DK)
(72) Inventor: FRICKMANN, Trine, DK-3480 Fredensborg (DK); HANSEN, Peter Farkas Binderup, DK-3520 Farum (DK); JENSEN, Leif, Müller, DK-4000 Roskilde (DK)
(74) Representative: Sundien, Thomas
(86) International application number: PCT/DK2002/000477
(87) International publication number: WO 2003/006389

(56) References cited:
- EP-A- 0 246 157
- WO-A-87/06926
- WO-A-88/06572
- CA-A- 992 311
- US-A- 2 029 307
- US-A- 5 465 942

## Description

This invention relates to a method of preparing a fiberizable melt of a mineral material.

It is well-known to prepare mineral fibres such as stone fibres and slag fibres from a melt of mineral materials by a spinning process. The melt is conventionally prepared in a cupola furnace which is charged with alternating layers of a carbonaceous material such as coke and a mixture of minerals and which is heated by combustion of the carbonaceous material. The oxygen for the combustion is supplied to the interior of the cupola furnace in the form of blast air through a number of tuyeres provided in the wall of the furnace shaft.

It is well-known to use a furnace shaft having tuyeres which protrude a short distance inwardly from the shaft wall and have outlet openings located close to the shaft wall.

The use of such tuyeres presents the drawback that a column of unburned coke tends to be formed in the central region of the furnace shaft because the blast air supplied through the tuyeres does not reach the central region in a sufficient amount to cause full combustion of the coke located in said region. Thus instead of the coke being part of the heat generating combustion reaction, it causes an energy consuming CO₂ gassification to take place, where the CO₂ produced by combustion reacts with the coke to form CO.

Consequently the caloric value of the coke present in the central region is not utilized and, moreover, the CO₂ gassification dissipates considerable amounts of the combustion energy.

Furthermore the downward movement of the charge of mineral materials and coke in the central region of the furnace becomes slow.

This problem is aggravated with increasing diameters of the furnace shaft, e.g. diameters of 1.8 m or more.

A special problem arising when using furnace shafts having such large diameters is that the generation of energy in the form of an increased amount of coke has to be increased to an unacceptable level and the operation becomes unstable when it is desired to re-establish normal operation following a desired temporary reduction of the capacity of the furnace to below about 70%. It has been theorized that a stationary ("dead") cylindrical mass is formed at the center of the furnace shaft during the reduced production and that said mass cannot be set into motion again.

Generally the use of furnaces having large diameters e.g. of above 1.8 m involves problems, if the capacity of the furnace is to be reduced. The capacity is typically reduced by decreasing the amount of air supplied through the tuyeres, but by reducing the amount of air, it is difficult to supply air to the central zone of the furnace.

It has been attempted to obtain a more uniform combustion of coke and thus a better distribution of heat in shaft furnaces by using tuyeres having a fixed length and terminating closer to the center of the shaft, but this solution has not been successful.

Thus, such tuyeres tend to cause bridge building between the tuyeres and such bridges tend to prevent the emptying of the furnace after opening of the bottom of the shaft furnace when production is stopped.

US patent No. 5,465,942 discloses a metal refining vessel having tuyeres for introducing a treatment agent such as oxygen or coal dust in the molten metal and below the surface thereof. The vessel comprises tuyeres which are axially slidable in a block of refractory material fitted into the wall of the vessel.

During the refining operation the tuyere tips burn away and the axially slidable tuyeres may be pushed inwardly by a suitable distance so that the consumed tuyere tip is replaced. Similar tuyeres which allow the distance between the furnace wall and the end of the tuyere to be maintained constant are described in Canadian patent No. 992,311.

The method of the invention comprises the steps of introducing a charge of minerals and carbonaceous material into the interior of a shaft furnace provided with a number of tuyeres and introducing blast air into the furnace through the tuyeres so as to generate a combustion of the carbonaceous material causing the minerals to melt, and discharging the melt thus formed from the lower end of the furnace shaft, said method being characterized in that the position of the tip of at least one of the tuyeres is adjustable relative to the center line of the shaft furnace and that the said tip is placed at a distance of between 10 and 70 %, preferably 30-60% and more preferably 45-55% of r, where r is the inner radius of the shaft furnace measured at the level of the tuyeres, from the center line thereof at least during part of the operation of the furnace.

Thus a uniform high temperature zone can be established over the whole cross sectional area of the furnace shaft by adjusting the tips of the tuyeres to a position within the above-mentioned range.

Furthermore it is even possible by moving the tips of the tuyeres close to the centerline of the shaft to generate a higher temperature at the center of the shaft than at the shaft wall and thus to reduce the heat loss to said shaft wall.

The possibility of moving the tips of the tuyeres relative to the center line of the furnace may solve the above-mentioned problems arising in connection with a desirable temporary decrease of the capacity of the furnace and may also be used for controlling the capacity of the furnace.

When the tuyeres protrude from the furnace wall into the shaft, they may support the charge of raw materials due to bridge building and when the melting operation is stopped and the furnace is to be emptied, such bridge building may prevent the unmolten material from falling out through the opened furnace bottom.

This problem may be solved by the method of the invention by moving the tips of the tuyeres back to a position adjacent to the furnace wall.

If such bridge building occurs during normal production, a similar action may be taken or the temperature profile may be changed with the object of breaking down the bridges.

The method of the invention is particularly suitable for use in the production of melts from charges containing components, such as Al₂O₃ having high melting points. Such components are to be dissolved in the melt formed from the other components of the melt and by moving the tips of the tuyeres close to the center of the furnace it is possible to provide in said zone a high temperature melt which increases the dissolution rate of the high melting components.

In a preferred embodiment of the method of the invention, the tip(s) of the tuyere(s) is/(are) moved to a position adjacent to the furnace wall and temporarily maintained in said position prior to the opening of the bottom of the furnace so as to cause solid material which may adhere to the wall to melt and thus to facilitate the emptying of the furnace.

The adjustable tuyeres preferably comprise a pipe which is mounted telescopically moveable in a conventional tuyere protruding from the shaft wall and which comprises an opening connected to a blast air supply system.

The telescopically moveable pipe preferably has an outer diameter which is somewhat smaller than the inner diameter of the protruding tuyere so as to allow a free movement of the adjustable tuyere.

In order to prevent that the tuyeres are damaged e.g. by deformation or melting, they should be made from a heat resistant material and/or be cooled e.g. with water or oil.

The tuyeres in a conventional cupola furnace are normally mounted in one or two circumferentially extending rows each comprising a number of tuyeres.

The method of the invention is particularly suitable for use in a cupola furnace.

In a cupola furnace for use in the method of the invention at least one and preferably three or more tuyeres are adjustable.

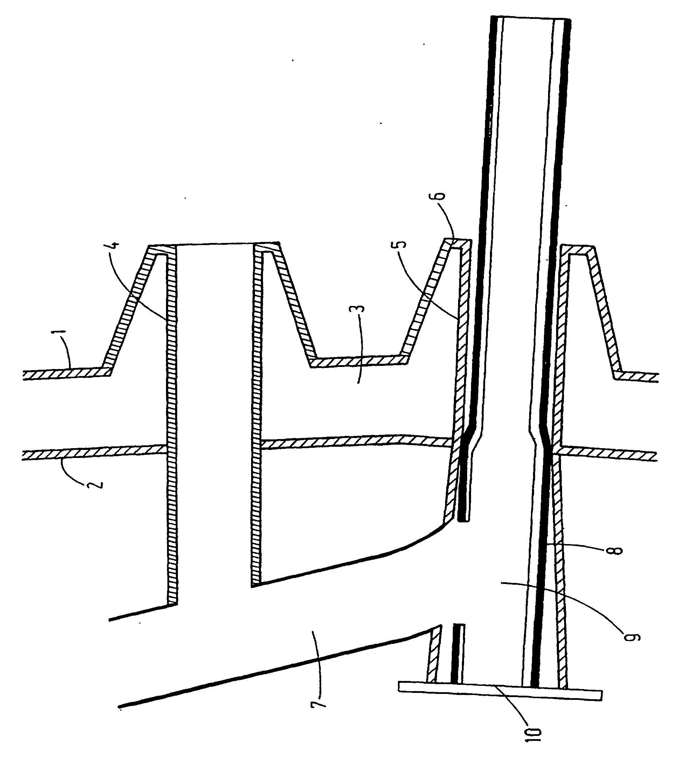

The invention will be described in further detail with reference to the drawing which schematically illustrates a vertical sectional view through a furnace wall comprising a longitudinally adjustable tuyere.

The drawing illustrates an inner shaft wall 1 and an outer shaft wall 2 which together define a flow path 3 for a cooling medium such as water.

The drawing further shows two tuyeres 4 and 5 which protrude from the inner shaft wall and terminates in a tip 6. The opposite end of each tuyere is connected with a supply channel 7 for blast air.

A pipe 8 which is mounted axially displaceable in the tuyere 5. An opening 9 is provided in the side of the pipe 8 and said opening communicates with the blast air supply channel 7. The diameter of the pipe 8 is somewhat smaller than the inner diameter of the tuyere 5 so that blast air is allowed to flow not only within the pipe 8 but also along its exterior side.

The outer end 10 of the pipe 8 is closed and is connected with means (not shown) for axially adjusting the position of the pipe 8 relative to the tuyere 5.

## Claims

1. Method of preparing a fiberizable melt of a mineral material comprising the steps of introducing a charge of minerals and carbonaceous material into the interior of a shaft furnace provided with a number of tuyeres (4, 5) and introducing blast air into the furnace through the tuyeres (4, 5) so as to generate a combustion of the carbonaceous material causing the minerals to melt, and discharging the melt thus formed from the lower end of the furnace shaft, **characterized in that** the location of the tip (6) of at least one (5) of the tuyeres (4, 5) is adjustable relative to the center line of the shaft furnace, that the said tip (6) is placed at a distance of between 10 and 70 % of r, where r is the inner radius of the shaft furnace measured at the level of the tuyeres (4, 5), from the center line thereof, at least during part of the operation of the furnace.

2. A method according to claim 1 **characterized in that** the tip (6) of the tuyere (5) is moved to a position adjacent to the furnace wall and temporarily maintained in said position prior to the opening of the bottom of the furnace.

3. A method according to claim 1 or 2 **characterized in that** the adjustable tuyere (5) comprises a pipe (8) which is mounted telescopically movable in a tuyere (5) protruding from the shaft wall (1).

4. A method according to any of the preceding claims **characterized in that** the shaft furnace is a cupola furnace preferably having an internal diameter of at least 1.8 m.

## Patentansprüche

1. Verfahren zur Herstellung einer zu Fasern verarbeitbaren Schmelze eines Mineralmaterials, umfassend die folgenden Schritte: Einbringen einer Beschickung aus Mineralien und einem kohlenstoffhaltigen Material ins Innere eines Schachtofens, der mit einer Anzahl von Winddüsen (4, 5) versehen ist, und Einbringen von Gebläseluft durch die Winddüsen (4, 5) in den Ofen, um eine Verbrennung des kohlenstoffreichen Materials zu erzeugen, um ein Schmelzen der Mineralien zu verursachen, und Ablassen der so gebildeten Schmelze vom unteren Ende des Ofenschachts,
**dadurch gekennzeichnet, dass** die Stelle der Spitze (6) von zumindest einer (5) der Winddüsen (4, 5) in Bezug auf die Mittellinie des Schachtofens verstellbar ist, und dass die Spitze (6) zumindest während eines Teils des Betriebs des Ofens in einem Abstand von zwischen 10 und 70 % von r, wobei r der in der Ebene der Luftdüsen (4, 5) gemessene Innenradius des Schachtofens ist, von seiner Mittellinie angeordnet wird.

2. Verfahren nach Anspruch 1, **dadurch gekennzeichnet, dass** die Spitze (6) der Winddüse (5) vor dem Öffnen des Bodens des Ofens in eine Stellung neben der Ofenwand bewegt wird und zeitweilig in dieser Stellung behalten wird.

3. Verfahren nach Anspruch 1 oder 2, **dadurch gekennzeichnet, dass** die verstellbare Winddüse (5) ein Rohr (8) umfasst, das in einer Winddüse (5), die von der Schachtwand (1) vorspringt, ausziehbar beweglich angebracht ist.

4. Verfahren nach einem der vorhergehenden Ansprüche, **dadurch gekennzeichnet, dass** der Schachtofen ein Kupolofen ist, der vorzugsweise einen Innendurchmesser von zumindest 1,8 m aufweist.

## Revendications

1. Procédé de préparation d'une masse fondue d'un matériau minéral pouvant être transformée en fibres comprenant les étapes consistant à introduire une charge de minéraux et d'un matériau carboné à l'intérieur d'un four à cuve pourvu d'un certain nombre de tuyères (4,5) et introduire de l'air soufflé dans le four par l'intermédiaire des tuyères (4,5) afin de générer une combustion du matériau carboné provoquant la fusion des minéraux, et décharger la coulée ainsi formée depuis l'extrémité inférieure du four à cuve, **caractérisé en ce que** l'emplacement du sommet (6) d'au moins une (5) parmi les tuyères (4,5) est réglable par rapport à la ligne centrale du four à cuve, **en ce que** ledit sommet (6) est placé à une distance comprise entre 10 et 70 % de r, où r est le rayon interne du four à cuve mesuré au niveau des tuyères (4,5), à partir de la ligne centrale de celle-ci, au moins pendant une partie du fonctionnement du four.

2. Procédé selon la revendication 1 **caractérisé en ce que** le sommet (6) de la tuyère (5) est déplacé jusqu'à une position adjacente à la paroi du four et temporairement maintenu dans ladite position avant l'ouverture du fond du four.

3. Procédé selon l'une quelconque des revendications 1 ou 2 **caractérisé en ce que** la tuyère réglable (5) comprend un tuyau (8) qui est monté de manière à être mobile de façon télescopique dans une tuyère (5) faisant saillie depuis la paroi (1) de la cuve.

4. Procédé selon l'une quelconque des revendications précédentes **caractérisé en ce que** le four à cuve est un cubilot ayant de préférence un diamètre interne d'au moins 1,8 m.
